# EUROPEAN PATENT SPECIFICATION

(11) **EP 0 590 149 B1**
(45) Date of publication and mention of the grant of the patent: **20.08.1997**
(21) Application number: 92908225.3
(22) Date of filing: 15.04.1992
(51) Int. Cl.: F16J 15/12, F01N 7/18, F16L 23/16

(54) **GASKET FOR HIGH-TEMPERATURE USE**
DICHTUNG ZUM GEBRAUCH BEI HOHEN TEMPERATUREN
JOINT D'ETANCHEITE DESTINE AUX UTILISATIONS A HAUTE TEMPERATURE

(43) Date of publication of application: 06.04.1994
(73) Proprietor: NIPPON PILLAR PACKING CO., LTD., Osaka-shi, Osaka 532 (JP)
(72) Inventor: TAKAOKA, Masahiko, Sanda-shi, Hyogo 669-13 (JP); MIYOSHI, Takeshi, Sanda-shi, Hyogo 669-13 (JP)
(74) Representative: Fleuchaus, Leo, Dipl.-Ing.
(86) International application number: JP9200482
(87) International publication number: WO9321463

(56) References cited:
- JP-A-57 031 975
- JP-U-57 000 162

## Description

### Technical Field

The present invention relates to a high-temperature resistant gasket according to the preambles of independent claims 1 and 2 which is used as a seal at connection parts of pipes through which a high-temperature fluid passes, and more particularly a high-temperature resistant gasket to be suitably used as a seal at connection parts of exhaust pipes in a motor vehicle.

### Background Art

Such a high-temperature resistant gasket is for example known from JP-A-57-31975 which discloses a gasket that is molded mainly of a substance in which a tape-like gasket material is covered with a metallic mesh which comprises two overlapping tapes of substantially identical dimensions in both length and width.

Additionally, as a high-temperature resistant gasket to be used as a seal, for example, between opposite surfaces of flanges which connect exhaust pipes in a motor vehicle, the following conventional gaskets are also known:

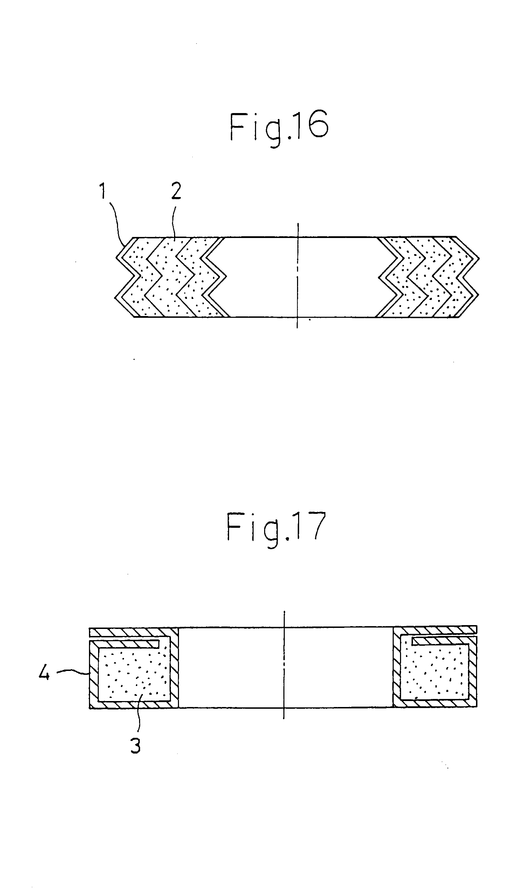

A first one of the volute type is shown in Fig. 16, in which a hoop member 1 made of SUS (stainless steel) or the like is rolled up as overlapping a filler member 2 such as a beater sheet of ceramic fibers. This gasket is fitted in annular concaves formed in either or both opposite surfaces of flanges for connecting exhaust pipes to each other, and both flanges are clamped and secured to each other with bolts, thus providing a seal between the opposite surof the flanges.

A second one is as disclosed in Japanese Patent Laid-Open Publication No. 2-253060. As shown in Fig. 17, this gasket is of the metal jacket type in which a metallic line member made of SUS or the like is rolled up at a plurality of times to form a ring-like blank, the ring-like blank is uniformly pressed to form an annular center member 3, and the center member 3 is covered with a covering member 4 comprising a metallic thin plate made of SUS or the like. This gasket is fitted in an annular concave formed in one of the opposite surfaces of flanges for connecting exhaust pipes to each other. The flanges are clamped and secured to each other with bolts, thus providing a seal between the opposite surfaces of the flanges.

A third one is as disclosed in Japanese Patent Publication No. 60-53224 or Japanese Patent Publication No. 58-21144. More specifically, this gasket is of the metallic knitted mesh type in which a tape-like member comprising a metallic knitted mesh and an inorganic material such as expanded graphite or the like inserted therein, is rolled up, and the resulting rolled body is put in molds and axially compression-molded.

In the conventional volute-type high-temperature resistant gasket shown in Fig. 16, the filler member 2 together with the hoop member 1 is strongly clamped. Accordingly, if the gasket is low in density, sufficient sealing properties cannot be obtained. Further, the gasket cannot stand such a great clamping surface pressure. Accordingly, the gasket is generally made high in density, thus lacking flexibility. In the conventional metal jacket-type high-temperature resistant gasket shown in Fig. 17, both the center member 3 and the covering member 4 are made of metal. Accordingly, the gasket lacks flexibility, resulting in poor adaptability with respect to the flange surfaces to be sealed, which exert a great influence to the sealing properties.

In each of such conventional gaskets, in order to provide a predetermined sealing performance, it is required to remarkably increase a clamp load to be exerted at the time when the flanges are clamped with bolts, and to finish flat the flange surfaces to be sealed. That is, the flange surfaces to be sealed are made flat by machining means such as cutting of a forged product, which is disadvantageous in view of productivity and cost. In this connection, the flanges themselves are required to be thick enough to stand a great clamp load, and the number of bolts to be used is required to be increased. This disadvantageously causes the exhaust pipe portions and the like of a motor vehicle using this gasket to be weighty.

On the other hand, the conventional gasket of the metallic knitted mesh type is improved in rigidity and is therefore advantageous in view of handling convenience. However, if vibration is exerted to the gasket, the inserted metallic knitted mesh is moved to readily form leak passages of a fluid in the molded body of the inorganic material such as expanded graphite. Particularly, in a gasket in which the metallic knitted mesh is inserted in the vicinity of the gasket surface, when the surfaces to be sealed are clamped, portions of the molded body of the inorganic material such as expanded graphite or the like, are compressed and moved inwardly. This causes the metallic knitted mesh to be relatively exposed to the gasket surfaces. Accordingly, the exposed portions may come in contact with the flange surfaces to be sealed, or may be vibrated as coming in contact therewith. In such a case, leak passages of a fluid are more readily formed. This disadvantageously remarkably lowers the sealing performance and readily causes the inorganic material to come off.

In view of the background art above-mentioned, the present invention is proposed with the object of providing a high-temperature resistant gasket which can exhibit, with a less clamp load, a sealing performance equal to or more than that of a conventional gasket, with the use of which the exhaust pipes and the like can be made lightweight, and which can be used with flanges mass-produced with less cost.

### Disclosure of the Invention

To achieve the object above-mentioned, the present invention provides two embodiments of a high-temperature resistant gasket as defined in independent claims 1 and 2.

According to the high-temperature resistant gasket of the present invention, the annular base body is made from a molded article of an inorganic substance and is covered, at each of the inner and outer peripheral surfaces thereof or at each of both axial end surfaces thereof, with the metallic mesh member. Accordingly, while giving a suitable rigidity to the gasket, the gasket density can be readily controlled at the time of molding. In particular, when the base body is low in density, there can be readily obtained a gasket excellent in flexibility and adaptability with respect to flange surfaces to be sealed. Further, the metallic mesh member is integral with the base body. This not only prevents the base body and the metallic mesh member from being relatively moved at the time when vibration is exerted to the gasket, but also restrains the base body from creeping. As a result, there is minimized a decrease in sealing properties which is caused by formation, in the base body, of passages through which a fluid passes. Thus, the initial sealing properties can be stably maintained. Accordingly, even though the clamp load is not increased so much, the gasket can produce sealing properties equal to or more than those of a conventional gasket. In this connection, the flange surfaces to be sealed may be roughly finished more or less. Therefore, there may be employed machining means such as pressing which is excellent in productivity and low in cost. Further, it is not required to thicken the flanges themselves in order to deal with a clamp load. Also, the number of bolts to be used can be reduced. Thus, the entire pipe connection parts can be made lightweight. Further, the base body made from the molded article of the inorganic substance is covered, at each of the inner and outer peripheral surfaces thereof or at each of both axial end surfaces thereof, with a metallic mesh member. This satisfactorily prevents the base body from being damaged at the time when the high-temperature resistant gasket is used or replaced. Further, the metallic mesh member and the base body are made in a unitary structure. This prevents the base body made from the molded body of the inorganic substance from coming off and falling off due to vibration or an external force exerted at the time of replacement. This remarkably improves the entire gasket in durability. Alternatively, a metallic mesh may be disposed inside of the base body. In such an arrangement, the gasket can be further improved in handling convenience at the time of mounting or replacement thereof.

In the high-temperature resistant gasket to achieve the object above-mentioned, the inorganic substance forming the base body may be selected from the group consisting of expanded graphite, mica, a beater sheet of cramic fibers and vermiculite. In such a case, by controlling the molding density, there can be readily produced a low-density base body.

The gasket may be produced in the manner that: a tape of a metallic mesh member overlaps a tape of an inorganic substance forming the base body in the longitudinal direction thereof, the tape of the metallic mesh member being longer in length than the tape of the inorganic substance, the tape of the metallic mesh member having widths equal to and smaller than the width of the tape of the inorganic substance; the both tapes are rolled up; and the rolled body is molded in the form of a predetermined ring. Alternatively, the gasket may be produced in the manner that: a tape of a metallic mesh member overlaps a tape of an inorganic substance forming the base body at the center thereof in the longitudinal direction thereof, the tape of the metallic mesh member being wider in width and shorter in length than the tape of the inorganic substance; the both tapes are rolled up; both transverse ends of the tape of the metallic mesh member projecting from both transverse ends of the tape of the inorganic substance, are turned on both axial end surfaces of the rolled body; and the rolled body is molded in the form of a predetermined ring. Accordingly, the base member and the metalllic mesh member serving as a covering member can be readily and securely made in a unitary structure, and the base body can be covered at each of the inner and outer peripheral surfaces thereof or at each of the axial end surfaces thereof with the covering member in the course of the gasket producing process. Further, by suitably changing the length and width of each of the tape of the metallic mesh member and the tape of the inorganic substance forming the base body, the gasket may be optionally changed in section.

Further, an annular projection may be formed at at least one of the axial end surfaces of the base body or at at least one of the inner and outer peripheral surfaces of the base body. In such an arrangement, when the gasket is clamped between the flanges, the surface pressure can be locally increased at this projection, thus further improving the gasket in sealing properties.

### Brief Description of the Drawings

Figure 1 is a section view of a high-temperature resistant gasket according to a first embodiment of the present invention, illustrating how the gasket is mounted on flanged connection parts of exhaust pipes;
Figure 2 is a vertical section view of the high-temperature resistant gasket in Figure 1;
Figure 3 to Figure 5 are views illustrating, step by step, an example of a method of producing the high-temperature resistant gasket according to the first embodiment of the present invention;
Figure 6 is a schematic view illustrating the arrangement of a device for measuring the amount of a fluid leaking through a high-temperature resistant gasket;
Figure 7 is a view of an arrangement for measuring the amount of a fluid leaking through a high-temperature resistant gasket as mounted on the pipes;
Figure 8 is a table showing the measured results of leakage amounts;
Figure 9 is a graph illustrating the comparison results on sealing performance of the high-temperature resistant gasket of the present invention and a conventional gasket, both as used at ambient temperature;
Figure 10 is a vertical section view of a high-temperature resistant gasket according to a second embodiment of the present invention;
Figures 11 and 12 are vertical section views of modifications of the high-temperature resistant gasket of the present invention;
Figures 13 to 15 are views illustrating, step by step, an example of a method of producing the high-temperature resistant gasket according to the second embodiment of the present invention; and
Figures 16 and 17 are vertical section views of conventional high-temperature resistant gaskets of the volute type and of the metal jacket type.

### Best Mode for Carrying Out the Invention

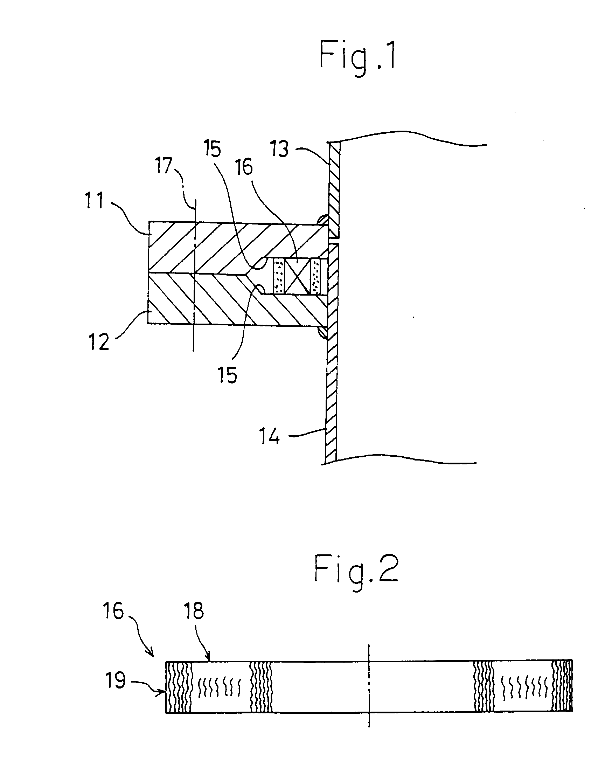

Fig. 1 is a section view of a high-temperature resistant gasket of the present invention, illustrating how the gasket is mounted on connection parts of exhaust pipes. In Fig. 1, connection flanges 11, 12 are secured to exhaust pipes 13, 14 to be connected to each other, and an annular high-temperature resistant gasket 16 is fitted in annular concaves 15 formed in the opposite surfaces of the flanges 11, 12. The flanges 11, 12 are clamped and secured to each other at a plurality of circumferential positions thereof with bolts 17.

Fig. 2 shows the arrangement of the high-temperature resistant gasket 16 fitted in the concaves 15. In Fig. 2, an annular base body 18 having a rectangular section is made from a molded article of an inorganic substance. The base body 18 is covered at each of the inner and outer peripheral surfaces thereof with a metallic mesh member 19. That is, the metallic mesh member 19 is rolled up in and together with the base body 18 so that the metallic mesh member 19 and the base body 18 are made in a unitary structure.

As the inorganic substance forming the base body 18, there is used one or more substances selected from the group consisting of expanded graphite, mica, a beater sheet of ceramic fibers and vermiculite. The metallic mesh member 19 may be made of, for example, SUS (stainless steel).

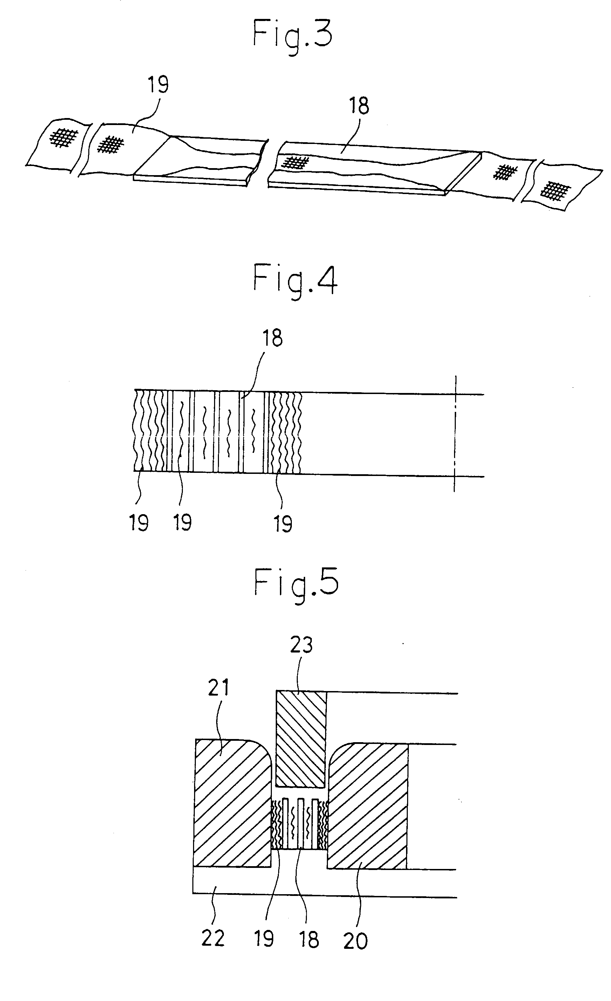

With reference to Figs. 3 to 5, the following description will discuss an example of a method of producing the high-temperature resistant gasket 16 having the arrangement above-mentioned. There is prepared a tape 18 made of expanded graphite as the inorganic substance forming the base body. As the metallic mesh member, there is prepared a tape 19 formed by knitting a line member of SUS 304 having a diameter of 0.15 mm. The tape 19 has a narrow width at the center portion thereof, and a width equal to that of the expanded graphite tape 18, at each of the both ends of the tape 19. The tape 19 is longer than the expanded graphite tape 18.

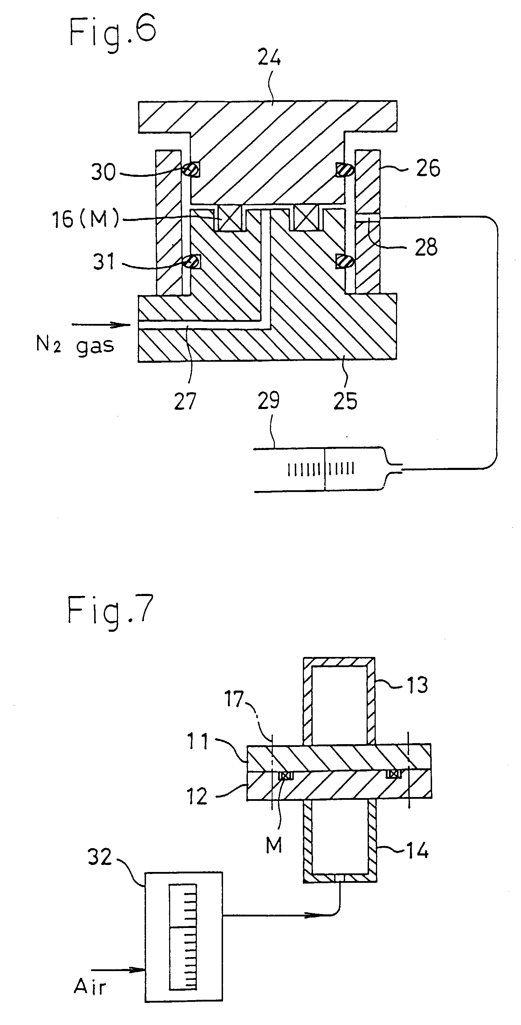

As shown in Fig. 3, the knitted tape 19 of SUS 304 overlaps the expanded graphite tape 18 in the vicinity of the center thereof in the longitudinal direction thereof. From one end in the longitudinal direction, the knitted tape 19 is rolled up, and the expanded graphite tape 18 is also rolled up together with the knitted tape 19. Thus, there is formed an annular base body 18 in which the knitted tape 19 has been rolled up singly at the starting and terminating steps of the tape rolling operation, and in which the knitted tape 19 has been rolled up together with the expanded graphite tape 18 in the intermediate course of the tape rolling operation. As shown in Fig. 5, the annular base body 18 is put between a center mold 20 and an outer mold 21 and pressed between a bottom mold 22 and a pressing mold 23. Thus, there is formed a gasket in which the annular base body 18 is covered at each of the inner and outer peripheral surfaces thereof with the metallic knitted tape 19 and in which the sealing portions adapted to be opposite to flanges, are made of expanded graphite.

Fig. 6 is a schematic view of a basic device for measuring the amount of a fluid leaking through a sample of high-temperature resistant gasket. In Fig. 6, a pair of holding jigs 24, 25 are disposed for holding a sample of high-temperature resistant gasket M therebetween, and a casing body 26 is fitted on the holding jigs 24, 25. One holding jig 25 has a passage 27 through which a measuring fluid, for example N₂ gas, passes and is injected inside of the gasket sample M. Connected to a detection port 28 of the casing body 26 is a measuring cylinder 29 having a soapy water film for detecting the leakage of N₂ gas through the gasket sample M. O-rings 30, 31 are interposed between the outer peripheral surfaces of the holding jigs 24, 25 and the inner peripheral surface of the casing body 26.

As high-temperature resistant gasket samples to be tested, there were prepared an example of the present invention having the arrangement mentioned earlier, and two conventional gaskets, i.e., (i) a gasket of the volute type using a hoop member made of SUS 304 and a filler member made of a beater sheet of ceramic fibers, and (ii) a gasket of the metal jacket type using a metal-reinforced graphite sheet as a center member and a covering member of SUS 304. A test was conducted on each of these samples for the amount of fluid leakage.

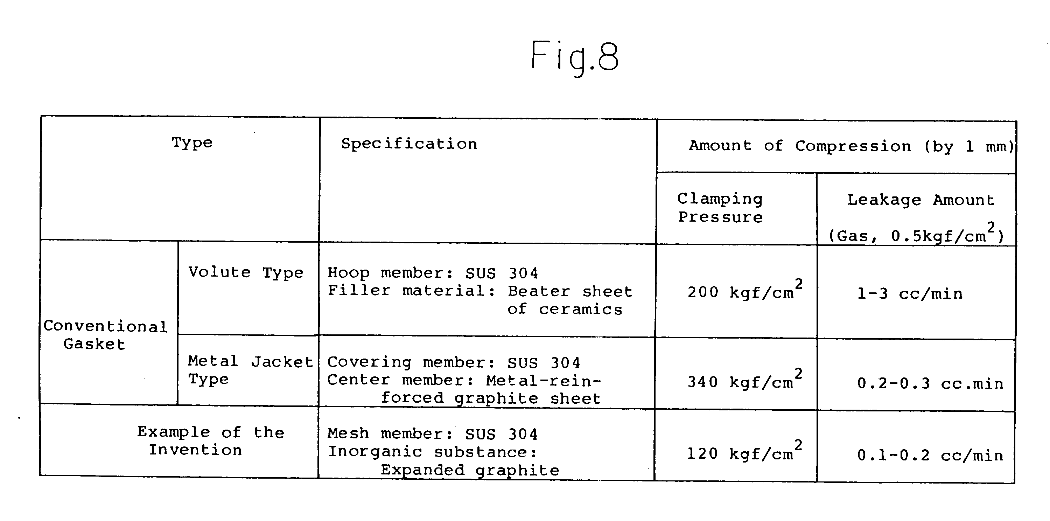

The test for leakage amount above-mentioned may be conducted in a manner shown in Fig. 7, in which with one ends of exhaust pipes 13, 14 closed, a gasket sample is mounted between flanges 11, 12 of the exhaust pipes 13, 14. In this case, there may be used a flow meter 32 for air serving as a measuring fluid.

In each of the tests using the device shown in Fig. 6, the holding jigs 24, 25 were clamped until each gasket sample M (16) interposed therebetween was compressed by 1 mm in height. The test results are shown in Fig. 8. In each test, there was measured a period of time during which the leakage amount reached a predetermined leakage amount of N₂ gas, e.g., 10 cc, and the leakage amount per unit time was calculated. As apparent from Fig. 8, each of the conventional gaskets of the volute type and of the metal jacket type, could not restrain the leakage in the practically allowable range unless there was generated a clamping pressure as great as about 200 to about 340 kgf/cm². On the other hand, the example of the present invention could restrain the leakage more effectively than each conventional gasket, with a clamping pressure of 120 Kgf/cm² which was much smaller than that requried in each conventional gasket. Thus, it was understood that the present invention was remarkably improved in sealing properties and workability.

This is because the expanded graphite tape forming the base body 18 is a molded article. More specifically, a low-density molded article can be readily formed by controlling the molding density, and it is possible to dispose layers of an inorganic substance liable to be readily fit to the contact surfaces of the flanges. This produces a good sealing effect.

According to the present invention, it is not required to apply a great clamping pressure as abovementioned. Accordingly, the flanges 11, 12 can be reduced in thickness and the number of bolts 17 to be used can be reduced. This contributes to reduction in weight of the exhaust pipe portions. Further, since high sealing properties can be obtained even with a small clamping pressure, it is not required that the opposite surfaces of the flanges 11, 12 are specially finished, but there may be used pressed articles as the flanges 11, 12.

Further, the knitted tape of SUS 304 serving as the covering member 19, is integrally rolled up in the expanded graphite tape forming the base body 18. Accordingly, the base body 18 is reinforced and therefore presents a suitable rigidity. This not only prevents the base body 18 from coming off, but also improves the base body in handling convenience and resistance to vibration.

When removing the high-temperature resistant gasket 16 at the time of maintenance or the like, or when the high-temperature resistant gasket 16 is mounted on a part to be strongly vibrated, there is the likelihood that the base body 18 is rubbed and damaged at the inner and outer peripheral surfaces thereof, in particular at the ends of the inner and outer peripheral surfaces thereof. However, the base body 18 is covered with the covering member 19 of a SUS-304 knitted tape as mentioned earlier. This prevents such damages. Further, since the covering member 19 is integrated in the base body 18, there is no possibility of the covering member 19 being separated or coming off.

Consideration will be now taken on the case where the expanded graphite tape forming the base body 18 has the same length and the same width as those of the SUS-304 knitted tape serving as the covering member 19, and both the base body 18 and the covering member 19 are rolled up in the same width from the beginning to the end. In such a case, due to the knitted tape having the same width throughout the length thereof, a fluid to be sealed is liable to flow in the axial direction of the base body 18. Further, when the knitted tape is exposed to the axial end surfaces of the base body 18, such exposed portions are adapted to come in contact with the surfaces to be sealed when clamped. This causes a fluid to leak more readily. In the embodiment above-mentioned, however, the base body 18 comprising the expanded graphite tape and the covering member 19 comprising the narrow-width knitted tape of SUS 304, are made in a unitary structure with the covering member 19 disposed only at the center portion of the base body 18. Such an arrangement remarkably reduces the leakage of a fluid in the axial direction of the base body 18. Further, this prevents the knitted tape from being exposed to the both axial ends of the base body 18, thus enabling the excellent sealing properties to be stably maintained for a long period of time.

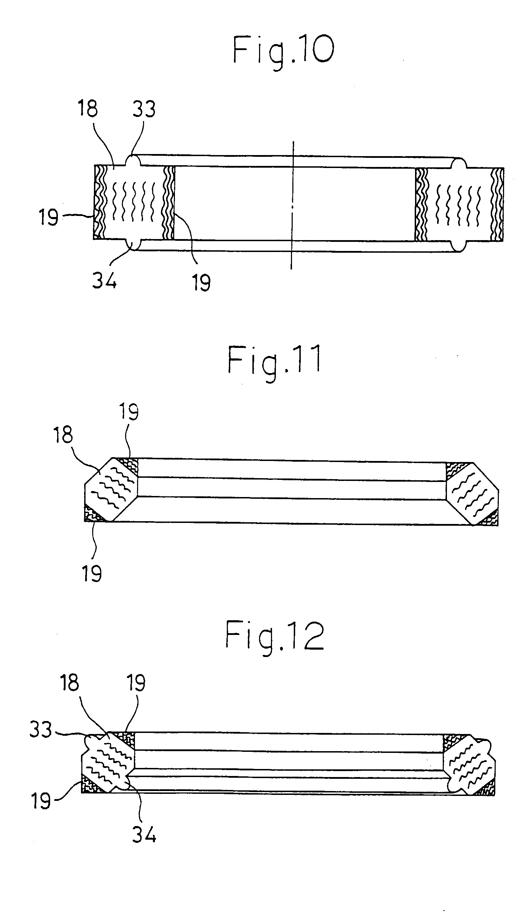

Fig. 10 is a section view of a high-temperature resistant gasket according to a second embodiment of the present invention. In this second embodiment, the base body 18 comprising expanded graphite or the like is provided at each of both axial end surfaces thereof with an annular projection 33. According to the present invention, the annular projection 33 may be formed at one of the axial end surfaces of the base body 18.

When the high-temperature resistant gasket having the arrangement above-mentioned is interposed between the flanges 11, 12 and the flanges 11, 12 are clamped, there is formed a portion where the surface pressure is locally high. This further improves the gasket in sealing properties.

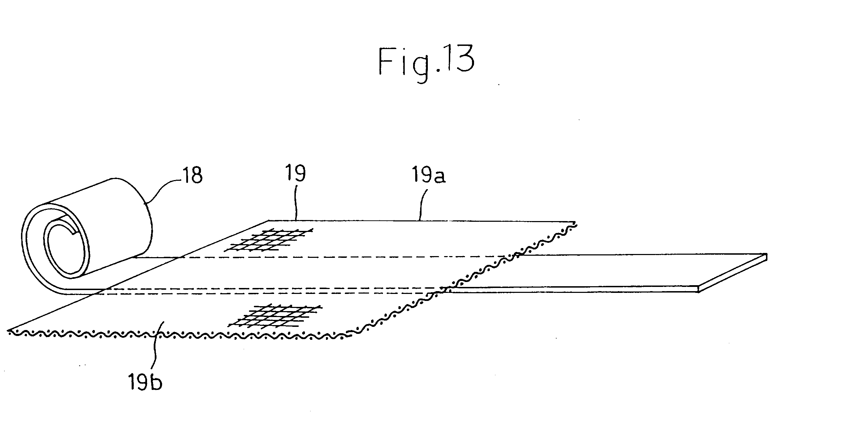

In each of the embodiments, the description has been made of the high-temperature resistant gasket having a rectangular section. As shown in Figs. 11 and 12, however, the gasket may be so formed as to generally present a truncated cone in section. To form such a gasket, as shown in Figs. 13 to 15, there are prepared (i) a tape 18 made of expanded graphite as the inorganic substance forming the base body, and (ii) a tape 19, serving as the metallic mesh member, as obtained by knitting a line member of SUS 304 having a diameter of 0.15 mm, the tape 19 being wider and shorter than the expanded graphite tape 18.

As the inorganic substance forming the base body, there are used one or more substances selected from the group consisting of expanded graphite, mica, a beater sheet of ceramic fibers and vermiculite.

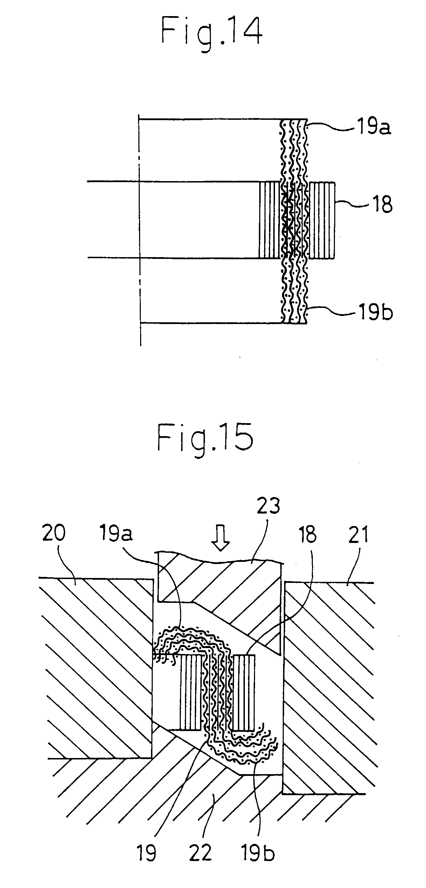

As shown in Fig. 13, the knitted tape 19 of SUS 304 overlaps the expanded graphite tape 18 in the vicinity of the center thereof in the longitudinal direction rection thereof. From one end in the longitudinal the expanded graphite tape 18 is rolled up, and the knitted tape 19 is also rolled up together with the tape 18. Thus, there is formed an annular base body 18 in which the expanded graphite tape 18 has been rolled up singly at the starting and terminating steps of the rolling operation, and in which the expanded graphite tape 18 has been rolled up together with the knitted tape 19 in the intermediate course of the rolling operation. As shown in Fig. 14, the transverse ends 19a, 19b of the knitted tape 19 project from the base body 18 made of the expanded graphite tape, in the axial directions thereof. As shown in Fig. 15, the base body 18 with the transverse ends 19a, 19b projecting therefrom, is put between a center mold 20 and an outer mold 21 and pressed between a bottom mold 22 and a pressing mold 23. Thus, the base body 18 is covered at each of the axial end surfaces thereof with the knitted tape 19.

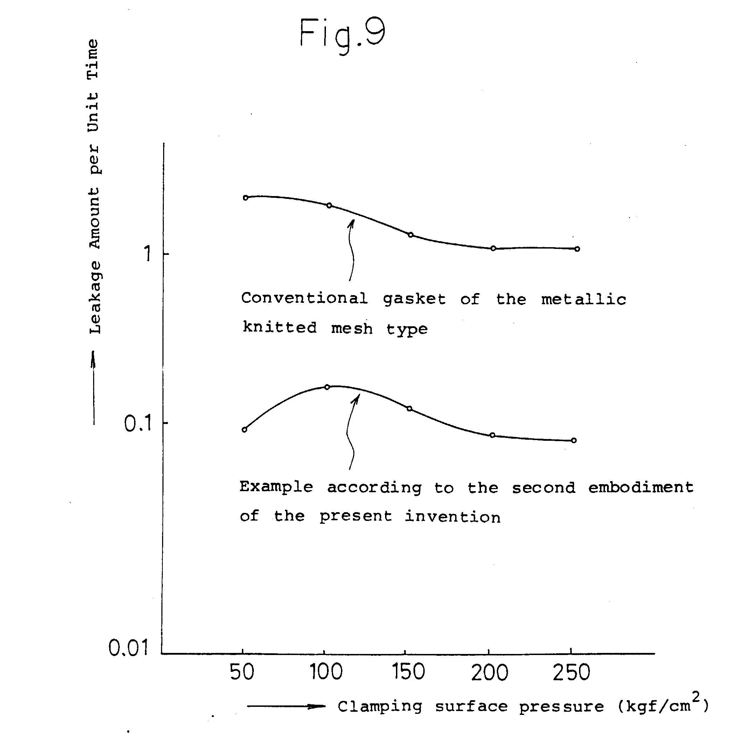

Fig. 9 shows the results of room-temperature sealing tests, which represent the relationship between clamping surface pressure and leakage amount. More specifically, the tests were conducted on (i) an example of the gasket according to the second embodiment of the present invention and (ii) an example of the conventional gasket of the metallic knitted mesh type obtained in the manner that a tape-like member comprising a metallic knitted mesh and an inorganic material such as expanded graphite or the like inserted therein, was rolled up, and the rolled body was put in molds and axially compression-molded. With each of the gaskets fitted between opposite flange surfaces, nitrogen gas was caused to flow at 0.5 Kgf/cm² in the connected pipes, and there were measured the clamping surface pressures and the leakage amounts. It is apparent from the test results in Fig. 9 that, in the example of the second embodiment, the leakage amounts are less by one digit, regardless of the clamping surface pressure value, than those of the example of the conventional gasket of the metal knitted mesh type. In particular, it is apparent that, in the example of the second embodiment, the leakage amount is remarkably restrained when the clamping surface pressure is small. This is because, in the conventional gasket of the metallic knitted mesh type, the metallic knitted mesh is exposed to the gasket surfaces which come in contact with the flanges, so that the fluid to be sealed is liable to leak.

By changing the length and width of each of the tape of the inorganic substance and the tape of the metallic mesh material, the gasket of the present invention can be applied to any of a variety of connection structures, in addition to flanged structures.

### Industrial Applicability

As discussed in the foregoing, the high-temperature resistant gasket of the present invention is improved in the materials and shapes of the annular base body and the covering member which covers each of the specific portions of the base body. Accordingly, without a great clamping pressure required, the gasket of the present invention can assure high sealing properties so that pipe connection parts can be made lightweight. Thus, the gasket of the present invention can be suitably used as a seal at connection parts of pipes through which any of a variety of high-temperature fluids passes. Particularly, the gasket of the present invention can be suitably used as a seal device at connection parts of exhaust pipes in a motor vehicle.

## Claims

1. A high-temperature resistant gasket (16) comprising an annular base body made by rolling up two overlapping tapes, one tape being made of metallic mesh member (19) and the other tape being a moulded tape (18) of inorganic substance, **characterised in that** said base body is provided at each of the inner and outer peripheral surfaces thereof with a covering layer made of several turns of the metallic mesh member (19) integral with said base body, and in that the tape of a metallic mesh member (19) overlapping the tape (18) of an inorganic substance is longer in length than said tape of the inorganic substance but narrower in width in the overlapping area.

2. A high-temperature resistant gasket (16) comprising an annular base body made by rolling up two overlapping tapes, one tape being made of a metallic mesh member (19) and the other tape being a moulded tape (18) of inorganic substance, **characterised in that** said base body being provided at each of the axial end surfaces thereof with a covering layer made of the metallic mesh member (19) integral with said base body, said covering layers being obtained by overlapping and rolling up the tape (19) of a metallic mesh member and the tape (18) of an inorganic substance forming the base body at the center thereof in the longitudinal direction thereof, said tape (19) of the metallic mesh member being shorter in length but wider in width than said tape (18) of the inorganic substance in the overlapping area; whereby both transverse ends of said tape of the metallic mesh member project from both transverse ends of said tape of the inorganic substance, and are turned on both axial end surfaces of said base body.

3. A high-temperature resistant gasket according to Claim 1 or 2, wherein the inorganic substance serving as a component material of the base body, is selected from the group consisting of expanded graphite, mica, a beater sheet of ceramic fibers and vermiculite.

4. A high-temperature resistant gasket according to Claim 1 or 2, wherein an annular projection (33, 34) is formed at at least one of both axial end surfaces of the annular base body.

5. A high-temperature resistant gasket according to Claim 1 or 2, wherein an annular projection (33, 34) is integrally formed at at least one of the inner and outer peripheral surfaces of the annular base body.

6. A high-temperature resistant gasket according to Claim 1 or 2, wherein the annular base body is so formed as to generally present a truncated cone in section.

7. A high-temperature resistant gasket according to Claim 1 or 2, wherein an annular projection (33, 34) is formed at least one of the inner and outer peripheral surfaces of the annular base body which generally presents a truncated cone in section.

## Patentansprüche

1. Eine hochtemperaturfeste Dichtung (16) bestehend aus einem ringförmigen Grundkörper, der durch Aufrollen von zwei übereinandergelegten Bändern gemacht wird, wobei ein Band aus einem Metallmaschenglied (19) besteht und das andere Band ein geformtes Band (18) aus anorganischer Substanz ist, dadurch gekennzeichnet, daß der Grundkörper sowohl auf der inneren als auch auf der äußeren Peripheriefläche mit einer Deckschicht versehen ist, die aus mehreren Windungen des Metallmaschenglieds (19) besteht, das integral mit dem Grundkörper ausgebildet ist, und daß das Band aus einem Metallmaschenglied (19), das das Band (18) aus anorganischer Substanz überlappt, länger als dieses Band aus anorganischer Substanz ist, jedoch im Überlappungsbereich eine geringere Breite aufweist.

2. Eine hochtemperaturfeste Dichtung (16) bestehend aus einem ringförmigen Grundkörper, der durch Aufrollen von zwei übereinandergelegten Bändern gemacht wird, wobei ein Band aus einem Metallmaschenglied (19) besteht und das andere Band ein geformtes Band (18) aus anorganischer Substanz ist, dadurch gekennzeichnet, daß der Grundkörper an jeder axialen Endfläche mit einer Deckschicht aus dem Metallmaschenglied (19) besteht, das integral mit dem Grundkörper ausgebildet ist, die Deckschichten durch Überlappen und Aufrollen des Bands (19) aus einem Metallmaschenglied und des Bands (18) aus anorganischer Substanz, das den Grundkörper bildet, an seiner Mitte in Längsrichtung erhalten werden, wobei das Band (19) aus dem Metallmaschenglied im Überlappungsbereich kürzer, jedoch breiter als das Band (18) aus anorganischer Substanz ist; wobei beide Querenden des Bands aus dem Metallmaschenglied von beiden Querenden des Bands aus anorganischer Substanz vorstehen und auf beiden Axialendflächen des Grundkörpers umgeschlagen sind.

3. Eine hochtemperaturfeste Dichtung gemäß Anspruch 1 oder 2, in dem die anorganische Substanz, die als Komponentenmaterial des Grundkörpers dient, aus der Gruppe ausgewählt wird, die aus geschäumtem Graphit, Glimmer, einem Schlagblatt aus Keramikfasern und Vermiculit besteht.

4. Eine hochtemperaturfeste Dichtung gemäß Anspruch 1 oder 2, in dem ein ringförmig hervorstehendes Teil (33, 34) auf mindestens einer der beiden axialen Endflächen des ringförmigen Grundkörpers ausgebildet ist.

5. Eine hochtemperaturfeste Dichtung gemäß Anspruch 1 oder 2, in dem ein ringförmig hervorstehendes Teil (33, 34) integral auf wenigstens einer, der inneren und der äußeren Peripheriefläche des ringförmigen Grundkörpers ausgebildet ist.

6. Eine hochtemperaturfeste Dichtung gemäß Anspruch 1 oder 2, in dem der ringförmige Grundkörper so ausgebildet ist, daß er im allgemeinen einen kegelstumpfförmigen Querschnitt aufweist.

7. Eine hochtemperaturfeste Dichtung gemäß Anspruch 1 oder 2, in dem ein ringförmig hervorstehendes Teil (33, 34) auf wenigstens einer, der inneren und der äußeren Peripheriefläche des ringförmigen Grundkörpers ausgebildet ist, die im allgemeinen einen kegelstumpfförmigen Querschnitt aufweist.

## Revendications

1. Joint d'étanchéité (16) résistant aux hautes températures comprenant un corps de base annulaire constitué en plaquant ou laminant deux bandes se recouvrant, une bande étant constituée d'un élément de tissu à mailles métalliques (19) et l'autre bande étant une bande moulée (18) constituée d'une substance inorganique, caractérisé en ce que ledit corps de base est muni à chacune de ses surfaces périphériques intérieure et extérieure d'une couche de couverture constituée de plusieurs tours de l'élément de tissu à mailles métalliques (19) solidaire dudit corps de base et en ce que la bande de l'élément de tissu à mailles métalliques (19) recouvrant la bande (18) constituée d'une substance inorganique est d'une longueur plus longue que ladite bande constituée de la substance inorganique mais d'une largeur plus faible dans la zone de recouvrement.

2. Joint d'étanchéité (16) résistant aux hautes températures comprenant un corps de base annulaire constitué en plaquant ou laminant deux bandes se recouvrant, une bande étant constituée d'un élément de tissu à mailles métalliques (19) et l'autre bande étant constituée d'une bande moulée (18) d'une substance inorganique, caractérisé en ce que ledit corps de base étant muni à chacune de ses surfaces d'extrémité axiales d'une couche de couverture constituée de l'élément de tissu à mailles métalliques (19) solidaire dudit corps de base, lesdites couches de couverture étant obtenues en recouvrant et plaquant ou laminant la bande (19) de l'élément de tissu à mailles métalliques et la bande (18) de la substance inorganique formant le corps de base à son centre dans sa direction longitudinale, ladite bande (19) de l'élément de tissu à mailles métalliques étant d'une longueur plus courte mais d'une largeur plus large que ladite bande (18) de la substance inorganique dans la zone de recouvrement ; d'où il résulte que les deux extrémités transversales de ladite bande de l'élément de tissu à mailles métalliques dépassent des deux extrémités transversales de ladite bande de substance inorganique et sont retournées sur les deux surfaces d'extrémité axiales dudit corps de base.

3. Joint d'étanchéité résistant aux hautes températures selon la revendication 1 ou 2, dans lequel la substance inorganique servant comme matériau constitutif du corps de base est choisie dans le groupe qui est constitué du graphite expansé, du mica, d'une feuille peignée de fibres de céramique et de vermiculite.

4. Joint d'étanchéité résistant aux hautes températures selon la revendication 1 ou 2, dans lequel un embossage annulaire (33, 34) est formé au niveau d'au moins une des deux surfaces d'extrémité axiales du corps de base annulaire.

5. Joint d'étanchéité résistant aux hautes températures selon la revendication 1 ou 2, dans lequel un embossage annulaire (33, 34) est solidairement formé au niveau d'au moins une des surfaces périphériques intérieure et extérieure du corps de base annulaire.

6. Joint d'étanchéité résistant aux hautes températures selon la revendication 1 ou 2, dans lequel le corps de base annulaire est formé de façon à présenter généralement en section une forme de cône tronqué.

7. Joint d'étanchéité résistant aux hautes températures selon la revendication 1 ou 2, dans lequel un embossage annulaire (33, 34) est formé au niveau d'au moins une des surfaces périphériques intérieure et extérieure du corps de base annulaire qui présente généralement en section une forme de cône tronqué.
